(19) Europäisches Patentamt / European Patent Office / Office européen des brevets

(11) **EP 2 991 180 B1**

(12) **FASCICULE DE BREVET EUROPEEN**

(45) Date de publication et mention de la délivrance du brevet:
**29.03.2017 Bulletin 2017/13**

(51) Int Cl.:
**H02H 3/027** *(2006.01)*  **H02H 3/093** *(2006.01)*

(21) Numéro de dépôt: **15181617.0**

(22) Date de dépôt: **19.08.2015**

(54) **CIRCUIT D'ISOLATION ÉLECTRIQUE POUR DISPOSITIFS ÉLECTRIQUES CONNECTÉS EN RÉSEAU, ET PROCÉDÉ DE COMMANDE D'UN TEL CIRCUIT**

ELEKTRISCHE TRENNSCHALTUNG FÜR ELEKTRISCHE VORRICHTUNGEN, DIE IN EINEM NETZ VERBUNDEN SIND, STEUERVERFAHREN EINER SOLCHEN SCHALTUNG

ELECTRICAL ISOLATION CIRCUIT FOR ELECTRICAL DEVICES CONNECTED IN A NETWORK, AND METHOD FOR CONTROLLING SUCH A CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.08.2014 FR 1457983**

(43) Date de publication de la demande:
**02.03.2016 Bulletin 2016/09**

(73) Titulaire: **Fabrication d'Applications et de Réalisations Electroniques**
**45300 Dadonville (FR)**

(72) Inventeur: **BIZET, Hubert**
**45800 Saint Jean de Braye (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**WO-A1-2010/015334**

## Description

### Domaine technique

L'invention se situe dans le domaine de la gestion des courts-circuits dans un réseau de dispositifs électriques, en particulier lorsque le réseau est suffisamment étendu pour que la résistante linéique des lignes électriques reliant les dispositifs électriques ne soit pas négligeable. Elle s'applique notamment, mais pas exclusivement, aux dispositifs de détection d'incendie (capteurs) et/ou de mise en sécurité incendie (actionneurs). Plus précisément, l'invention concerne un circuit d'isolation électrique entre un premier tronçon de ligne électrique et un deuxième tronçon de ligne électrique, ainsi qu'un procédé de commande de ce circuit d'isolation. Elle concerne aussi un ensemble de détection d'incendie comprenant le circuit d'isolation et un capteur apte à détecter la présence d'un incendie. L'invention concerne enfin un ensemble de sécurité incendie comprenant un circuit d'isolation et un dispositif de mise en sécurité incendie.

### État de la technique antérieure

En matière de prévention et de lutte contre les incendies, la réglementation impose l'installation de dispositifs de détection d'incendie dans les bâtiments. Les établissements recevant du public et les immeubles de grande hauteur ont obligation d'installer un système centralisé de détection d'incendie. Le système centralisé de détection d'incendie comporte une pluralité de dispositifs de détection reliés en un réseau. Le réseau comporte en général une boucle qui permet, en cas d'ouverture accidentelle en un point de la boucle, d'alimenter malgré tout l'intégralité des dispositifs de détection. Le réseau peut aussi être formé d'une ou plusieurs branches de circuit reliant chacune les dispositifs de détection en série ou en parallèle. La mise en réseau des dispositifs de détection implique néanmoins, en cas de court-circuit en un point quelconque du réseau, une chute de tension sur tout le réseau, et donc la perte d'alimentation de l'ensemble des dispositifs de détection du réseau. Chaque branche peut être équipée d'un disjoncteur permettant son isolation en cas de court-circuit, permettant au reste du réseau de continuer à fonctionner. Chaque branche ne comporte qu'un nombre limité de dispositifs de détection afin d'empêcher la perte d'une part significative de dispositifs de détection en cas de défaut. Les dispositifs de détection peuvent eux-mêmes être équipés d'un disjoncteur permettant de les isoler électriquement de la ligne d'alimentation par laquelle ils sont alimentés. Bien que les disjoncteurs soient installés individuellement dans chaque dispositif de détection, l'apparition d'un court-circuit sur la ligne d'alimentation provoque l'isolation de l'ensemble des dispositifs de détection raccordés à cette ligne d'alimentation. La surveillance des incendies devient alors inopérante pour la partie du bâtiment où est installé le réseau de dispositifs de détection, voire pour l'ensemble du bâtiment.

Un système de détection d'incendie peut comporter une centrale de détection agencée pour alimenter un ou plusieurs réseaux de dispositifs de détection, et pour gérer leur fonctionnement. La centrale de détection peut notamment commander l'activation et la désactivation des dispositifs de détection, gérer la collecte et le traitement de données relatives à leur état de fonctionnement, et de données relatives à des mesures effectuées par les dispositifs de détection. Après la détection d'un court-circuit par chacun des dispositifs de détection, et le déclenchement de leur disjoncteur, la centrale de détection permet de réactiver successivement chaque dispositif de détection depuis le ou les dispositifs de détection les plus proches de la centrale de détection, jusqu'à la réapparition du court-circuit. Le point de court-circuit peut ainsi être localisé, et les dispositifs de détection encadrant le point de court-circuit peuvent être déconnectés, de sorte à isoler électriquement le point de court-circuit. Une telle gestion des courts-circuits permet de limiter le nombre de dispositifs de détection désactivés. Cependant, il implique de mettre en place une procédure potentiellement longue et complexe de localisation du point de court-circuit.

Le document WO 2010/015334 décrit un système de protection agencé pour équiper un réseau électrique et pour isoler la branche du réseau sur laquelle apparaît un court-circuit. Le système comprend plusieurs disjoncteurs disposés au niveau des noeuds du réseau électrique. Chaque disjoncteur est agencé pour se déclencher après une durée d'attente proportionnelle au logarithme du ratio entre le courant de faute $I_f$ circulant dans le disjoncteur, et le courant $I_m$ circulant dans un disjoncteur adjacent et contribuant principalement au courant de faute.

### Exposé de l'invention

Un but de l'invention est notamment de remédier à tout ou partie des inconvénients précités en proposant un circuit d'isolation électrique entre deux tronçons d'une ligne électrique apte à isoler les tronçons de ligne électrique s'il correspond au circuit d'isolation se trouvant le plus près du point de court-circuit. À cet effet, l'invention repose sur la propriété selon laquelle la résistance linéique de la ligne électrique engendre une variation de tension le long de cette ligne depuis le point de court-circuit. Lorsque les circuits d'isolation électriques sont relativement espacés les uns des autres, cette variation de tension peut être détectée au niveau de chaque circuit d'isolation, et le ou les circuits d'isolation ayant détecté la plus forte chute de tension effectuent une isolation des tronçons de ligne qu'ils relient. Le ou les circuits d'isolation ayant détecté la plus forte chute de tension sont déterminés en calculant, pour chaque circuit d'isolation électrique, une durée dite d'attente d'autant plus courte que la chute de tension est importante, et en vérifiant la chute de tension à l'expiration de la durée d'attente. Si la chute de tension est confirmée, le circuit d'isolation électrique s'ouvre pour isoler les deux tronçons de ligne électrique. Ainsi, les circuits d'isolation électrique ayant observé une plus faible chute de tension et retrouvant une tension nominale, c'est-à-dire les circuits d'isolation situés entre la centrale de détection et le circuit d'isolation le plus proche du point de court-circuit, ne sont pas ouverts. L'invention permet donc d'identifier et d'ouvrir les circuits d'isolation électrique les plus proches du point de court-circuit sans nécessiter de communication entre les différents circuits d'isolation.

Plus précisément, l'invention a pour objet un circuit d'isolation électrique entre un premier tronçon de ligne électrique et un deuxième tronçon de ligne électrique, comprenant :

   ■ une borne d'entrée apte à être connectée au premier tronçon de ligne électrique,
   ■ une borne de sortie apte à être connectée au deuxième tronçon de ligne électrique,
   ■ un circuit interrupteur pouvant prendre une position fermée dans laquelle il relie électriquement la borne d'entrée à la borne de sortie, et une position ouverte, dans laquelle il isole électriquement la borne d'entrée de la borne de sortie, et
   ■ un module de détection de court-circuit comportant :

      - un circuit de mesure apte à déterminer une tension, dite de contrôle, et une tension, dite de vérification, la tension de contrôle et la tension de vérification étant représentative d'une tension sur un point du circuit interrupteur, et
      - un circuit de commande agencé pour déterminer une durée d'attente en fonction de la tension de contrôle, pour ordonner au circuit de mesure, à l'expiration de la durée d'attente, une détermination de la tension de vérification, et pour commander, en fonction de la tension de vérification, l'ouverture ou non du circuit interrupteur à l'expiration de la durée d'attente,
      - le circuit interrupteur comportant deux interrupteurs commandés et deux diodes,

   les interrupteurs commandés étant commandés par le circuit de commande et étant connectés en série entre la borne d'entrée et la borne de sortie, un point de connexion commun entre les premier et deuxième interrupteurs étant appelé "noeud central", chaque diode étant connectée en parallèle de l'un des interrupteurs commandés, les diodes étant connectées entre elles par leur cathode.

Cette forme de réalisation présente l'avantage, lorsque les interrupteurs sont ouverts, d'isoler les deux tronçons de ligne électrique l'un de l'autre tout en permettant au noeud central de recevoir un courant pour le tronçon de ligne électrique non soumis au court-circuit.

Par l'expression "isolation électrique", on entend le fait d'interrompre la circulation d'un courant électrique entre deux points d'un circuit électrique, en l'occurrence entre les deux tronçons d'une ligne électrique. Le circuit d'isolation électrique selon l'invention pourrait ainsi être appelé "circuit d'interruption électrique".

La tension de contrôle peut notamment être représentative de la tension sur la borne d'entrée ou sur la borne de sortie. La tension peut être égale à la tension sur l'une des bornes, ou être proportionnelle à cette tension, par exemple si elle est prise sur un point distinct des bornes d'entrée et de sortie.

La détermination de la durée d'attente résulte d'un compromis. Elle doit être déterminée de manière à être suffisamment courte pour éviter à la centrale de détection à laquelle sont reliés le ou les dispositifs de détection de disjoncter, et suffisamment longue pour que des chutes de tension dues à un fonctionnement normal des dispositifs de détection n'entraînent pas l'activation inutile d'un ou plusieurs circuits d'isolation. Elle peut comporter une première période sensiblement proportionnelle à la tension de contrôle. En notant $U_{tst}$ la tension de contrôle, la durée d'attente $\Delta_{wt}$ peut prendre la forme suivante :

$$\Delta_{wt} = a \times U_{tst}$$

où a est un nombre réel strictement positif.

La durée d'attente $\Delta_{wt}$ est par exemple sensiblement égale, en millisecondes, à 2, 3 ou 4 fois la tension de contrôle, en volts.

La durée d'attente peut comporter, en outre, une deuxième période sensiblement constante. La durée d'attente $\Delta_{wt}$ prend alors la forme suivante :

$$\Delta_{wt} = a \times U_{tst} + b$$

où a et b sont deux nombres réels strictement positifs.

La deuxième période constante permet par exemple, lorsque la tension de contrôle est nulle, de disposer d'une durée d'attente non nulle. À la suite d'un court-circuit entraînant une chute totale de tension sur la ligne électrique, le circuit interrupteur peut en effet ne pas être en mesure de s'ouvrir immédiatement.

Dans cette forme de réalisation, la tension de contrôle peut être représentative de la tension sur la borne d'entrée, à la tension sur la borne de sortie, ou à la tension sur le noeud central.

Le circuit d'isolation électrique peut comprendre, en outre, un module d'alimentation agencé pour alimenter en énergie électrique le module de détection de court-circuit. Le module d'alimentation est alors de préférence connecté au noeud central, de manière à pouvoir recevoir un courant d'alimentation électrique circulant sur le premier tronçon de ligne électrique et/ou sur le deuxième tronçon de ligne électrique. Du fait de la présence des diodes, le courant d'alimentation peut être reçu que le circuit interrupteur soit ouvert ou fermé.

Le module d'alimentation peut comporter un condensateur agencé pour stocker une quantité d'énergie électrique apte à alimenter en énergie électrique le module de détection de court-circuit pendant une durée, dite durée d'autonomie, supérieure ou égale à la durée d'attente. Ainsi, même en cas de court-circuit, le circuit d'isolation peut continuer à fonctionner et à isoler si nécessaire les tronçons de ligne électrique qu'il relie.

Le circuit d'isolation électrique est prévu pour être installé le long d'une ligne électrique alimentant au moins un dispositif électrique tel qu'un détecteur d'incendie. Il peut être installé indépendamment de la position du ou des dispositifs électriques. Un circuit d'isolation peut aussi être installé au niveau de chaque dispositif électrique. Selon une première variante de réalisation, le circuit d'isolation forme un appareil électrique distinct du dispositif électrique. Il peut alors comprendre une borne d'alimentation connectée au noeud central, la borne d'alimentation étant apte à être connectée à un dispositif électrique.

Selon une deuxième variante de réalisation, le circuit d'isolation et le dispositif électrique forme un unique appareil électrique, autrement dit un dispositif électrique avec une fonction d'isolation de la ligne électrique sur laquelle il se connecte. Un ou plusieurs composants du dispositif électrique intégré peuvent alors être connectés au noeud central, de manière à pouvoir rester alimenter même lorsque le circuit interrupteur est ouvert.

Le circuit d'isolation électrique selon l'invention peut être agencé pour limiter sa consommation électrique. Dans ce but, le module de détection peut comporter, en outre, un comparateur apte à comparer une tension, dite de surveillance et représentative d'une tension sur un point du circuit interrupteur, à une tension de référence, et à générer un signal de comparaison en fonction du résultat de la comparaison. Le circuit de commande est alors agencé pour ordonner une détermination de la tension de contrôle, et pour passer, en fonction du signal de comparaison, d'un état de veille, dans lequel sa consommation électrique est limitée, à un état actif, dans lequel il est apte à ordonner une détermination de la tension de contrôle et de la tension de vérification, à déterminer la durée d'attente, et à commander l'ouverture du circuit interrupteur.

La tension de surveillance est par exemple représentative de la tension sur la borne d'entrée, sur la borne de sortie ou, le cas échéant, sur le noeud central.

L'invention a également pour objet un ensemble de détection comprenant un circuit d'isolation tel que décrit précédemment, et un capteur apte à détecter la présence d'un incendie. Le capteur est par exemple un capteur de fumée, un capteur de flamme, un capteur de chaleur, ou un capteur de monoxyde de carbone. À la place ou en plus du capteur d'incendie, l'ensemble de détection pourrait comprendre un déclencheur manuel.

L'invention a aussi pour objet un ensemble de sécurité incendie comprenant un circuit d'isolation tel que décrit précédemment, et un dispositif de mise en sécurité incendie. Le dispositif de mise en sécurité incendie peut être tout type d'actionneur utilisable en cas d'incendie, par exemple une vanne à commande à distance ou une sirène d'incendie.

L'invention a enfin pour objet un procédé de commande d'un circuit d'isolation électrique tel que décrit précédemment, le procédé comprenant successivement :

- ▪ une étape de détermination de la tension de contrôle,
- ▪ une étape de détermination de la durée d'attente en fonction de la tension de contrôle,
- ▪ une étape d'attente pendant la durée d'attente,
- ▪ une étape de vérification de la tension de contrôle comportant :

  - une sous-étape de détermination de la tension de vérification, et
  - une sous-étape de comparaison de la tension de vérification à une tension seuil, et

- ▪ si la tension de vérification est inférieure à la tension seuil, une étape d'ouverture du circuit interrupteur.

Selon une forme particulière de réalisation, l'étape de détermination de la tension de contrôle comprend une sous-étape de mesure dans laquelle une pluralité de mesures de la tension de contrôle sont effectuées, et une sous-étape de calcul d'une moyenne des mesures, appelée tension de contrôle moyenne, la durée d'attente étant déterminée en fonction de la tension de contrôle moyenne.

Lorsque le circuit d'isolation électrique comprend un comparateur, le procédé peut alors comporter, préalablement à l'étape de détermination de la tension de contrôle, une étape de comparaison de la tension de surveillance à la tension de référence, le comparateur générant le signal de comparaison. L'étape de détermination de la tension de contrôle et les étapes suivantes sont alors exécutées si la tension de surveillance est inférieure à la tension de référence, et ne sont pas exécutées sinon.

L'étape de comparaison de la tension de surveillance à la tension de référence permet de limiter la consommation électrique du circuit d'isolation et, plus particulièrement, de son module de détection de court-circuit, en le laissant dans un état de veille lorsque la tension de surveillance est supérieure à la tension de référence. Ainsi, le procédé peut comporter, lorsque la tension de surveillance est inférieure à la tension de référence, préalablement à l'étape de détermination de la tension de contrôle, une étape d'activation du circuit de commande dans laquelle il passe de l'état de veille à l'état actif.

Par ailleurs, le procédé peut aussi comporter, suite à l'étape de vérification de la tension de contrôle, si la tension de vérification est supérieure à la tension seuil, une étape de désactivation du circuit de commande dans laquelle il passe de l'état actif à l'état de veille.

## Description des figures

D'autres avantages et particularités de l'invention apparaîtront à la lecture de la description détaillée de mises en oeuvre et de modes de réalisation nullement limitatifs, au regard de dessins annexés sur lesquels :

- la figure 1 représente schématiquement un premier exemple de circuit d'isolation électrique ;
- la figure 2 représente schématiquement un deuxième exemple de circuit d'isolation électrique selon l'invention ;
- la figure 3 représente un exemple d'étapes du procédé d'un procédé de commande d'un circuit d'isolation électrique selon l'invention ;
- la figure 4 représente le fonctionnement d'un circuit d'isolation électrique selon l'invention ;
- la figure 5 représente schématiquement un exemple de système de détection comprenant plusieurs circuits d'isolation électrique selon l'invention connectés en réseau.

## Description de modes de réalisation

Les modes de réalisation décrits ci-après étant nullement limitatifs, on pourra notamment considérer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Dans le cadre de la présente demande, les qualificatifs "positif" et "négatif" sont utilisés pour différencier des éléments ou des points d'un circuit électrique présentant une certaine symétrie. Ils ne sont pas nécessairement représentatifs du signe de la tension entre ces éléments ou entre ces points, cette tension pouvant d'ailleurs être alternative.

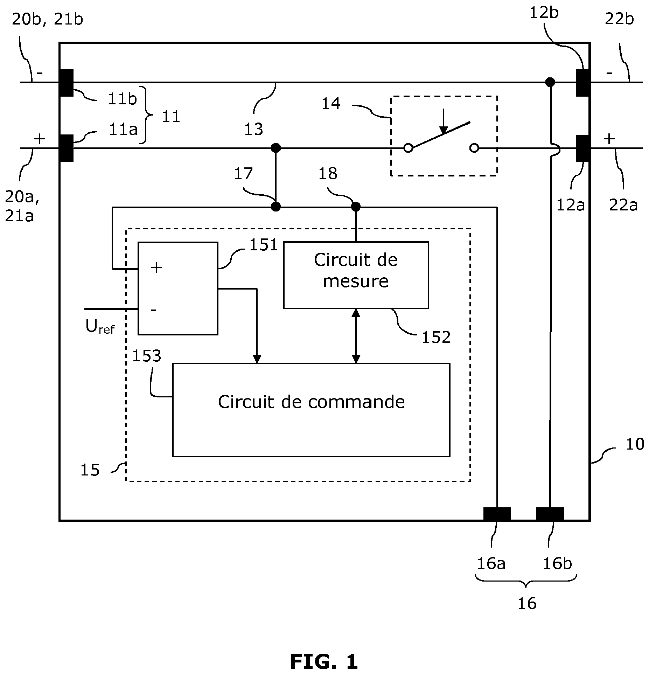

La figure 1 représente schématiquement un premier exemple de circuit d'isolation électrique entre des tronçons de ligne électrique. Le circuit d'isolation 10 comprend deux bornes dites d'entrée 11, à savoir une borne d'entrée positive 11a et une borne d'entrée négative 11b, et deux bornes dites de sortie 12, à savoir une borne de sortie positive 12a et une borne de sortie négative 12b. Les bornes d'entrée 11 et de sortie 12 permettent une connexion à une première ligne électrique 20a et à une deuxième ligne électrique 20b. En particulier, la borne d'entrée positive 11a est apte à être connectée à un premier tronçon d'une première ligne électrique, appelé premier tronçon positif 21a, et la borne d'entrée négative 11b est apte à être connectée à un premier tronçon d'une deuxième ligne électrique, appelé premier tronçon négatif 21b. De manière analogue, la borne de sortie positive 12a est apte à être connectée à un deuxième tronçon de la première ligne électrique, appelé deuxième tronçon positif 22a, et la borne de sortie négative 12b est apte à être connectée à un deuxième tronçon de la deuxième ligne électrique, appelé deuxième tronçon négatif 22b. Les lignes électriques 20a, 20b permettent d'alimenter en énergie électrique des dispositifs de détection, tels que des dispositifs de détection d'incendie. Elles permettent également le transport de données entre une centrale de détection et les dispositifs de détection. À titre d'exemple, des données peuvent transiter de la centrale de détection vers les dispositifs de détection sous forme d'une modulation d'amplitude en tension d'un signal, et des dispositifs de détection vers la centrale de détection sous forme d'une modulation d'amplitude en courant d'un signal. La deuxième ligne électrique 20b forme par exemple une masse du circuit électrique. La borne d'entrée négative 11b et la borne de sortie négative 12b sont connectés électriquement par une ligne de connexion 13.

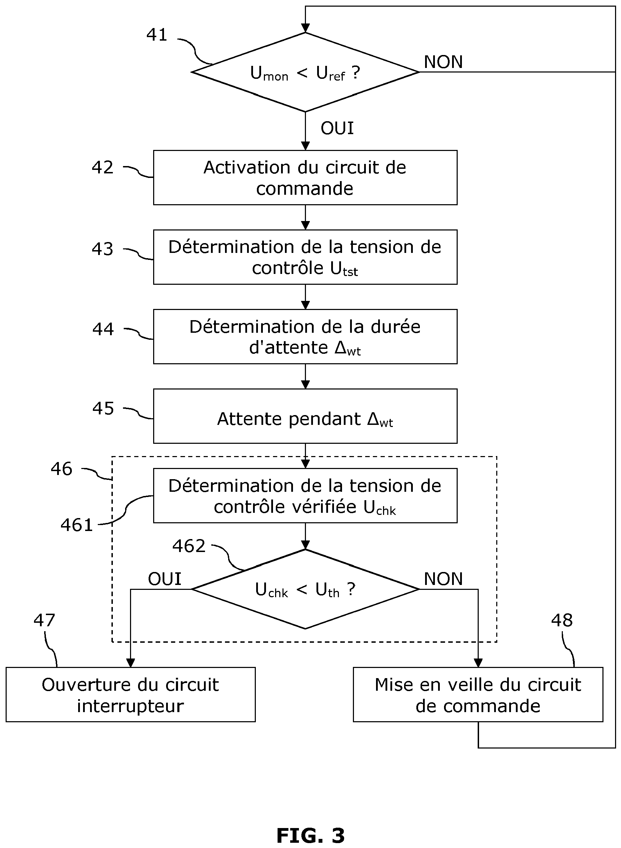

Le circuit d'isolation électrique 10 comporte, de plus, un circuit interrupteur 14 et un module 15 de détection de court-circuit. Le circuit interrupteur 14 est agencé pour pouvoir prendre une position fermée, dans laquelle il relie électriquement la borne d'entrée positive 11a à la borne de sortie positive 12a, et une position ouverte, dans laquelle il isole électriquement ces deux bornes 11a et 12a. Le circuit interrupteur 14 est commandé par le module 15 de détection de court-circuit. Il peut consister en un interrupteur commandé tel qu'un transistor. Le circuit interrupteur 14 pourrait également être agencé pour relier électriquement ou isoler électriquement la borne d'entrée négative 11b et la borne de sortie négative 12b, conjointement aux bornes d'entrée et de sortie positives 11a, 12a. Il comporterait alors deux interrupteurs commandés actionnés simultanément. Le module 15 comporte un comparateur 151, un circuit de mesure 152, et un circuit de commande 153. Le comparateur 151 est agencé pour comparer une tension sur la borne d'entrée positive 11a, appelée tension de surveillance, à une tension de référence $U_{ref}$, et pour générer un signal de comparaison en fonction du résultat de la comparaison. Il comprend une entrée positive connectée à la borne d'entrée positive 11a, une entrée négative recevant la tension de référence $U_{ref}$, et une sortie connectée au circuit de commande 153 et délivrant le signal de comparaison. La tension de référence $U_{ref}$ est déterminée de manière à être égale à une fraction d'une tension nominale sur la première ligne électrique 20a. Elle est par exemple comprise entre 20% et 80% de la tension nominale, de préférence entre 60% et 75%. Cette dernière plage de valeur permet de s'affranchir des oscillations de la tension sur la première ligne électrique 20a, tout en traitant relativement rapidement la chute de tension. Le circuit de mesure 152 est agencé pour déterminer une tension sur la borne d'entrée positive 11a, appelée tension de contrôle ou tension de vérification, selon l'instant auquel elle est déterminée. Il communique avec le circuit de commande 153 afin de pouvoir être activé pour une mesure sur ordre du circuit de commande 153, et pour communiquer le résultat de la mesure au circuit de commande 153. Le circuit de commande 153 est agencé pour ordonner au circuit de mesure 152 une détermination de la tension de contrôle en fonction du signal de comparaison, pour déterminer une durée d'attente en fonction de la tension de contrôle, pour ordonner au circuit de mesure 152, à l'expiration de la durée d'attente, une détermination de la tension de vérification, et pour commander, en fonction de la tension de vérification, une ouverture ou non du circuit interrupteur 14. Le fonctionnement du circuit d'isolation électrique 10, et en particulier du module 15 de détection de court-circuit, sera détaillé ci-dessous en référence à la figure 3.

Selon une forme préférentielle de réalisation du circuit d'isolation selon l'invention, le circuit de commande 153 est aussi agencé de manière à pouvoir passer d'un état de veille, dans lequel sa consommation électrique est limitée, à un état actif, dans lequel il est apte à remplir toutes ses fonctions. À titre d'illustration, la consommation du circuit de commande 153 dans l'état de veille peut être de l'ordre de 100 μA. Dans l'état actif, le circuit de commande 153 peut notamment ordonner une détermination de la tension de contrôle et de la tension de vérification, déterminer la durée d'attente, et commander l'ouverture et la fermeture du circuit interrupteur 14. Le passage de l'état de veille à l'état actif est commandé par le signal de comparaison reçu du comparateur 151. Le circuit de commande 153 peut par exemple comporter un microcontrôleur, un réseau prédiffusé programmable par l'utilisateur (FPGA), ou un processeur. Plus généralement, le circuit de commande 153 peut présenter tout type d'architecture matérielle ou logicielle. Le circuit de commande 153 peut passer d'un état de veille à un état actif par un mécanisme d'interruption.

Le circuit d'isolation électrique 10 comporte de plus des bornes d'alimentation 16 aptes à connecter un dispositif électrique, tel qu'un dispositif de détection, aux lignes électriques 20a et 20b. Une borne d'alimentation positive 16a est connectée à la borne d'entrée positive 11a, et une borne d'alimentation négative 16b est connectée à la ligne de connexion 13, c'est-à-dire à la borne d'entrée négative 11b et à la borne de sortie négative 12b. Un dispositif électrique ainsi connecté aux bornes d'alimentation 16 est alors connecté à la borne de sortie positive 12a lorsque le circuit interrupteur 14 est fermé, et isolé électriquement de cette borne lorsque le circuit interrupteur 14 est ouvert. La borne d'alimentation négative 16b reste connectée aux deux bornes négatives 11b et 12b, quel que soit l'état du circuit interrupteur 14, sauf si ce dernier est agencé pour permettre également l'isolation électrique entre ces deux bornes.

Il est à noter que, dans l'exemple de réalisation de la figure 1, le comparateur 151 et le circuit de mesure 152 sont chacun connectés à la borne d'entrée positive 11a, de sorte que la tension de surveillance, la tension de contrôle et la tension de vérification correspondent chacune à la tension sur cette borne, c'est-à-dire la tension du premier tronçon positif 21a. Cependant, le comparateur 151 et/ou le circuit de mesure 152 pourraient aussi être connectés à la borne de sortie positive 12a, de sorte que la tension prise en considération serait la tension du deuxième tronçon positif 22a. De manière générale, on appelle "point de mesure 17" le point sur lequel sont déterminées les tensions de surveillance, de contrôle et de vérification. Si le comparateur 151 et le circuit de mesure 152 sont connectés sur deux points distincts, deux points de mesure sont considérés. Comme indiqué plus loin, la tension de surveillance, la tension de contrôle et la tension de vérification sont considérées alors que le circuit interrupteur 14 est fermé. En conséquence, que le comparateur 151 et le circuit de mesure 152 soient connectés à la borne d'entrée positive 11a ou à la borne de sortie positive 12a n'a pas d'influence sur le fonctionnement du circuit d'isolation électrique 10.

De manière analogue, il a été considéré dans l'exemple de réalisation de la figure 1, que la borne d'alimentation positive 16a était connectée à la borne d'entrée positive 11a. Cependant, elle pourrait également être connectée à la borne de sortie positive 12a. On appelle ainsi "point d'alimentation 18" le point sur lequel vient se connecter la borne d'alimentation positive 16a, et donc le dispositif de détection. Il apparaît immédiatement à l'homme du métier que le côté auquel est connectée la borne d'alimentation positive 16a influence son isolation électrique de la borne d'entrée positive 11a et de la borne de sortie positive 12a lorsque le circuit interrupteur 14 est ouvert.

Par ailleurs, le circuit d'isolation électrique 10 peut comprendre un circuit de filtrage, non représenté, permettant de filtrer la tension de surveillance, de contrôle ou de vérification avant sa détermination, afin de s'affranchir d'éventuelles fluctuations transitoires, par exemple une modulation de la tension pour une communication entre la centrale de détection et le dispositif de détection connecté aux bornes d'alimentation 16.

Le circuit d'isolation électrique 10 peut aussi comporter un module d'alimentation, non représenté, agencé pour alimenter en énergie électrique le module 15 de détection de court-circuit. Le module d'alimentation peut notamment comprendre un circuit de filtrage pour redresser la tension reçue des bornes d'entrée 11 ou de sortie 12. Il peut aussi comprendre un circuit capacitif ou une batterie agencé pour stocker une quantité d'énergie électrique apte à alimenter de façon autonome le module 15 de détection de court-circuit pendant une certaine durée, dite durée d'autonomie.

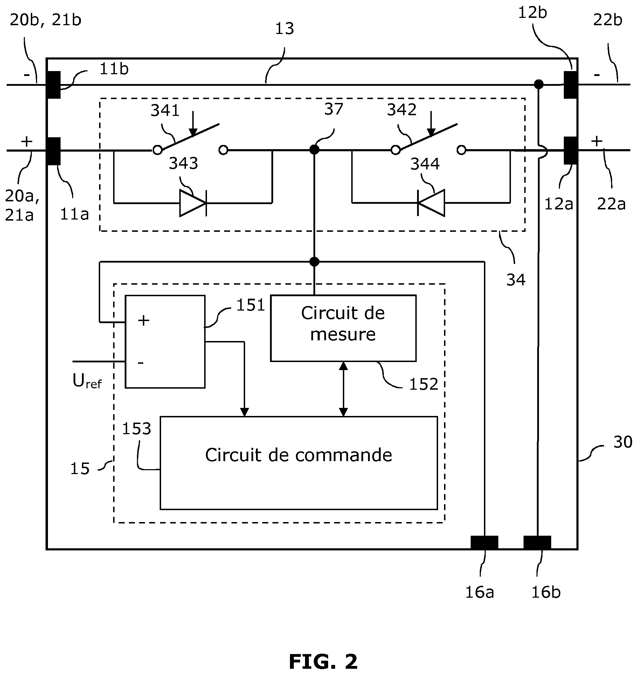

La figure 2 représente schématiquement un deuxième exemple de circuit d'isolation électrique selon l'invention. Le circuit d'isolation 30 comprend, de manière analogue au circuit d'isolation électrique 10 représenté sur la figure 1, deux bornes d'entrée 11, deux bornes de sortie 12, une ligne de connexion 13 reliant les deux bornes positives 11a et 12a, un circuit interrupteur 34, un module 15 de détection de court-circuit, et deux bornes d'alimentation 16. Le module 15 de détection de court-circuit est identique à celui de la figure 1. En revanche, le circuit interrupteur 34 diffère du circuit interrupteur 14 en ce qu'il comporte deux interrupteurs commandés 341, 342, et deux diodes 343, 344. Les interrupteurs commandés 341, 342 sont connectés en série entre la borne d'entrée positive 11a et la borne de sortie positive 12a. Ils sont commandés simultanément par le circuit de commande 153. Un point de connexion commun entre les interrupteurs commandés 341, 342 est appelé "noeud central 37". Chaque diode 343, 344 est connectée en parallèle de l'un des interrupteurs commandés 341 et 342, respectivement, les diodes étant connectées entre elles par leur cathode. Autrement dit, la diode 343 est connectée par son anode à la borne d'entrée positive 11 a, et par sa cathode au noeud central 37, et la diode 344 est connectée par son anode à la borne de sortie positive 12a, et par sa cathode au noeud central 37. L'entrée positive du comparateur 151, le circuit de mesure 152 et la borne d'alimentation positive 16a sont connectés au noeud central 37. Le noeud central 37 forme ainsi le point de mesure et le point d'alimentation tels que définis en référence à la figure 1. La borne d'alimentation négative 16b est connectée à la ligne de connexion 13.

Le circuit interrupteur 34 peut prendre une position fermée, dans laquelle il relie électriquement la borne d'entrée positive 11 a à la borne de sortie positive 12a, et une position ouverte dans laquelle il isole électriquement ces bornes 11a et 12a. En position fermée, le noeud central 37 est en contact direct avec les bornes positives 11a et 12a. Un courant électrique peut traverser indifféremment dans les deux sens le circuit interrupteur 34 entre les bornes positives 11a et 12a, via les interrupteurs commandés 341, 342. En position ouverte, les bornes 11 a et 12a sont isolées l'une de l'autre par le montage tête-bêche des diodes 343, 344. Un courant électrique ne peut donc pas passer de la borne d'entrée positive 11a à la borne de sortie positive 12a, et inversement. En revanche, le courant électrique peut passer de la borne d'entrée positive 11a ou de la borne de sortie positive 12a au noeud central 37. Ainsi, même lorsque le circuit interrupteur 34 est en position ouverte, le module 15 de détection de court-circuit et la borne d'alimentation positive 16a peuvent recevoir un courant électrique en provenance de la borne d'entrée positive 11a et/ou de la borne de sortie positive 12a, via la diode 343 et/ou la diode 344, respectivement.

Dans l'exemple de réalisation de la figure 2, le comparateur 151, le circuit de mesure 152 et la borne d'alimentation positive 16a sont chacun connectés au noeud central 37. Ils pourraient également être connectés à la borne d'entrée positive 11 a ou à la borne de sortie positive 12a, indépendamment l'un de l'autre. Cependant, la connexion de la borne d'alimentation positive 16a est avantageusement réalisée sur le noeud central 37 afin de permettre la circulation d'un courant électrique depuis l'une des bornes positives 11a, 12a même en position ouverte du circuit interrupteur 34. De même, si le circuit d'isolation électrique 30 comporte un module d'alimentation pour alimenter le module 15, ce module d'alimentation est de préférence connecté au noeud central 37.

La figure 3 représente, sous forme de logigramme, un exemple d'étapes du procédé de commande d'un circuit d'isolation électrique selon l'invention. À titre d'exemple, on considère que le procédé est appliqué au circuit d'isolation électrique 30 de la figure 2. Il s'applique néanmoins à tout type de circuit d'isolation selon l'invention, notamment le circuit d'isolation 10 de la figure 1. Dans une première étape 41, la tension de surveillance $U_{mon}$ sur le noeud central 37 est comparée à une tension de référence $U_{ref}$ par le comparateur 151. Cette étape 41 est normalement exécutée pendant toute la durée où le circuit interrupteur 34 est en position fermée. Elle peut être exécutée à intervalles réguliers ou en continu. En pratique, le comparateur 151 peut comparer la tension sur le noeud central 37 à la tension de référence $U_{ref}$ et générer un signal de comparaison prenant un premier état lorsque la tension de surveillance $U_{mon}$ est supérieure à la tension de référence $U_{ref}$, et un deuxième état sinon. Chaque état peut être déterminé par une valeur d'amplitude de la tension du signal de comparaison, ou par toute autre caractéristique du signal de comparaison. Si la tension de surveillance $U_{mon}$ est supérieure à la tension de référence $U_{ref}$, il est considéré que le noeud central 37 reçoit une tension d'amplitude normale, aucune chute de tension, par exemple due à un court-circuit, n'étant observée. L'étape 41 de surveillance est alors poursuivie. En revanche, si la tension de surveillance $U_{mon}$ est inférieure à la tension de référence $U_{ref}$, des étapes sont exécutées afin de déterminer si le circuit d'isolation 30 doit isoler le premier tronçon positif 21a du deuxième tronçon positif 22a. Ainsi, dans une deuxième étape 42, le circuit de commande 153 est activé. Il passe de l'état de veille à l'état actif. L'activation peut être déclenchée par le passage du signal de comparaison du premier au deuxième état, par exemple au moyen d'un mécanisme d'interruption. Dans une troisième étape 43, la tension de contrôle $U_{tst}$ est déterminée. Pour ce faire, le circuit de commande 153 envoie une requête au circuit de mesure 152, qui retourne la tension mesurée sur le noeud central 37. Dans une quatrième étape 44, une durée d'attente $\Delta_{wt}$ est déterminée par le circuit de commande 153 en fonction de la tension de contrôle $U_{tst}$.

Plus la tension de contrôle $U_{tst}$ est élevée, plus la durée d'attente $\Delta_{wt}$ est longue. Dans une cinquième étape 45, le circuit de commande 153 génère une attente pendant la durée d'attente $\Delta_{wt}$. À l'expiration de la durée d'attente $\Delta_{wt}$, la chute de tension sur le noeud central 37 est vérifiée dans une étape 46. L'étape 46 de vérification comprend une première sous-étape 461 dans laquelle la tension sur le noeud central 37, appelée tension de vérification $U_{chk}$, est à nouveau déterminée par le circuit de mesure 152 sur ordre du circuit de commande 153. Dans une deuxième sous-étape 462, la tension $U_{chk}$ est comparée à une tension seuil $U_{th}$ par le circuit de commande 153. La tension seuil $U_{th}$ est par exemple sensiblement égale à la tension de référence $U_{ref}$. Si la tension de vérification $U_{chk}$ est inférieure à la tension seuil $U_{th}$, cela signifie que la chute de tension n'a pas disparu et qu'il est nécessaire d'isoler électriquement les tronçons 21a et 22a. Ainsi, dans une étape 47, le circuit de commande 153 commande l'ouverture du circuit interrupteur 34. En revanche, si la tension de vérification $U_{chk}$ est supérieure à la tension seuil $U_{tn}$, cela signifie que la chute de tension a disparu. Il n'est alors pas nécessaire d'isoler les tronçons 21a et 22a. Le circuit de commande 153 n'étant plus utile, il est mis dans son état de veille dans une étape 48. À l'issue de cette étape 48, il est retourné à l'étape 41 de surveillance de la tension $U_{mon}$ sur le noeud central 37.

L'étape 43 de détermination de la tension de contrôle $U_{tst}$ peut être effectuée en prenant une unique mesure sur le point de mesure, en l'occurrence le noeud central 37, ou en prenant une pluralité de mesures les unes à la suite des autres, et en calculant une moyenne de ces mesures. Il peut s'agir d'une moyenne arithmétique, ou de tout autre type de moyenne. À titre d'exemple, entre 5 et 10 mesures peuvent être prises. La tension de contrôle ainsi déterminée peut être appelée tension de contrôle moyenne. Elle est utilisée pour déterminer la durée d'attente $\Delta_{wt}$. En prenant une pluralité de mesures pour déterminer la tension de contrôle $U_{tst}$, l'impact du bruit de mesure est réduit, ce qui permet de déterminer précisément la durée d'attente $\Delta_{wt}$ en fonction de la tension effective sur le noeud central 37.

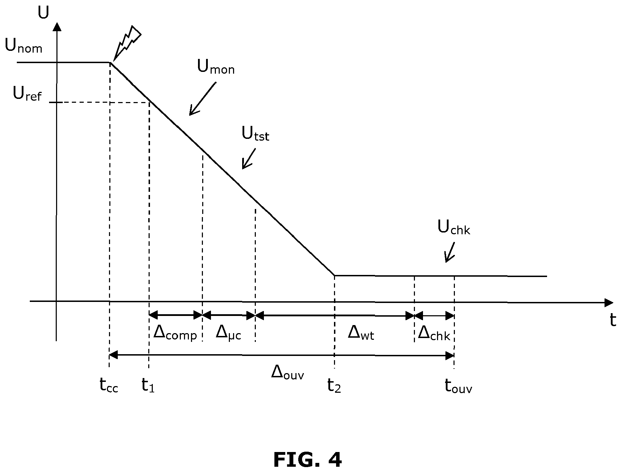

La figure 4 illustre, à l'aide d'un chronogramme, le fonctionnement d'un circuit d'isolation électrique selon l'invention. On considère toujours à titre d'exemple le circuit d'isolation 30 de la figure 2. L'axe des abscisses représente le temps et l'axe des ordonnées la tension sur le point de mesure ou sur le point d'alimentation, en l'occurrence sur le noeud central 37. Jusqu'à un instant $t_{cc}$, la tension $U_{mon}$ sur le noeud central 37 est sensiblement égale à une tension nominale $U_{nom}$. Un court-circuit se produit à l'instant $t_{cc}$, engendrant une chute graduelle de la tension sur le noeud central 37 jusqu'à un instant $t_2$ où la tension devient sensiblement nulle. Entre les instants $t_{cc}$ et $t_2$, la tension sur le noeud central 37 passe par la valeur de la tension de référence $U_{ref}$ à un instant $t_1$. Le comparateur 151, observant la tension $U_{mon}$, réagit avec un délai de réponse $\Delta_{comp}$, à l'expiration duquel le signal de comparaison passe du premier au deuxième état. Le circuit de commande 153 est alors activé dans l'étape 42. Il détermine ensuite la tension de contrôle $U_{tst}$ dans l'étape 43 à l'aide d'une ou plusieurs mesures et détermine la durée d'attente $\Delta_{wt}$ dans l'étape 44. L'exécution des étapes 42, 43 et 44 nécessite une durée de traitement notée $\Delta_{\mu c}$. Dans l'étape 45, une attente de durée $\Delta_{wt}$ est observée. À l'issue de cette attente, la tension $U_{chk}$ sur le noeud central 37 est vérifiée. Cette étape 45 nécessite une durée $\Delta_{chk}$. Si la tension $U_{chk}$ est inférieure à la tension seuil $U_{th}$, comme c'est le cas dans l'exemple de la figure 4, le circuit interrupteur 34 est ouvert à l'instant $t_{ouv}$. On note $\Delta_{ouv}$ la durée totale nécessaire à l'ouverture du circuit interrupteur 34 depuis l'apparition d'un court-circuit, c'est-à-dire la durée entre les instants $t_{cc}$ et $t_{ouv}$.

À titre illustratif, le circuit d'isolation selon l'invention peut présenter les caractéristiques suivantes. La tension nominale sur le noeud central 37 est par exemple sensiblement égale à 40 V. La tension de référence $U_{ref}$ et la tension seuil $U_{th}$ peuvent être sensiblement égales à 25 V. Le délai de réponse $\Delta_{comp}$ du comparateur 151 et le délai de traitement $\Delta_{\mu c}$ du circuit de commande 153 sont de l'ordre de 2 ms chacun. Le délai d'ouverture du circuit interrupteur 34 est inférieur à 100 $\mu$s.

La durée d'attente $\Delta_{wt}$ est corrélée à la tension de contrôle $U_{tst}$ déterminée, plus la tension étant élevée, plus la durée d'attente étant longue. Ainsi, dans un système de détection comprenant plusieurs circuits d'isolation électrique selon l'invention reliés par des tronçons d'une ligne électrique, du fait de la résistance linéique de la ligne électrique, le ou les circuits d'isolation électrique se trouvant au plus près d'un court-circuit détermineront une durée d'attente plus courte que les circuits d'isolation plus éloignés et seront les premiers à ouvrir leur circuit interrupteur pour isoler les deux tronçons qu'ils relient. Les circuits d'isolation électrique plus éloignés peuvent potentiellement retrouver une tension nominale sur leur noeud central. Dans ce cas, lors de l'étape 46 de vérification de la chute de tension, le rétablissement de la tension nominal est observé et l'ouverture du circuit interrupteur n'est pas commandée.

De manière générale, la durée d'attente $\Delta_{wt}$ doit être déterminée de manière à être suffisamment courte pour éviter à la centrale de détection à laquelle sont reliés les dispositifs de détection de disjoncter, et suffisamment longue pour que des chutes de tension dues à un fonctionnement normal des dispositifs de détection n'entraînent pas l'activation inutile d'un ou plusieurs circuits d'isolation. La centrale de détection peut par exemple disjoncter en cas de court-circuit de durée supérieure à environ 100 ms. La durée $\Delta_{ouv}$ doit alors être inférieure à cette durée. La durée d'attente $\Delta_{wt}$ doit aussi être suffisamment longue pour que les durées $\Delta_{comp}$, $\Delta_{\mu c}$ et $\Delta_{chk}$ soient négligeables par rapport à cette durée. Ces durées sont en effet susceptibles de varier d'un circuit d'isolation électrique à un autre.

Selon une première variante de réalisation, la durée d'attente $\Delta_{wt}$ est proportionnelle à la tension de

contrôle $U_{tst}$. Elle est par exemple déterminée comme étant égale, en millisecondes, à deux fois la tension de contrôle $U_{tst}$, considérée en volts. Ainsi, pour une tension de contrôle $U_{tst}$ de 25 V, la durée d'attente $\Delta_{wt}$ est de 50 ms.

Selon une deuxième variante de réalisation, la durée d'attente $\Delta_{wt}$ comporte une première période proportionnelle à la tension de contrôle $U_{tst}$, et une deuxième période sensiblement constante. À titre d'exemple, la durée d'attente $\Delta_{wt}$ peut être déterminée par la relation suivante :

$$\Delta_{wt} = 40 + 2 \times U_{tst}$$

Où $\Delta_{wt}$ est déterminée en millisecondes et $U_{tst}$ en volts.

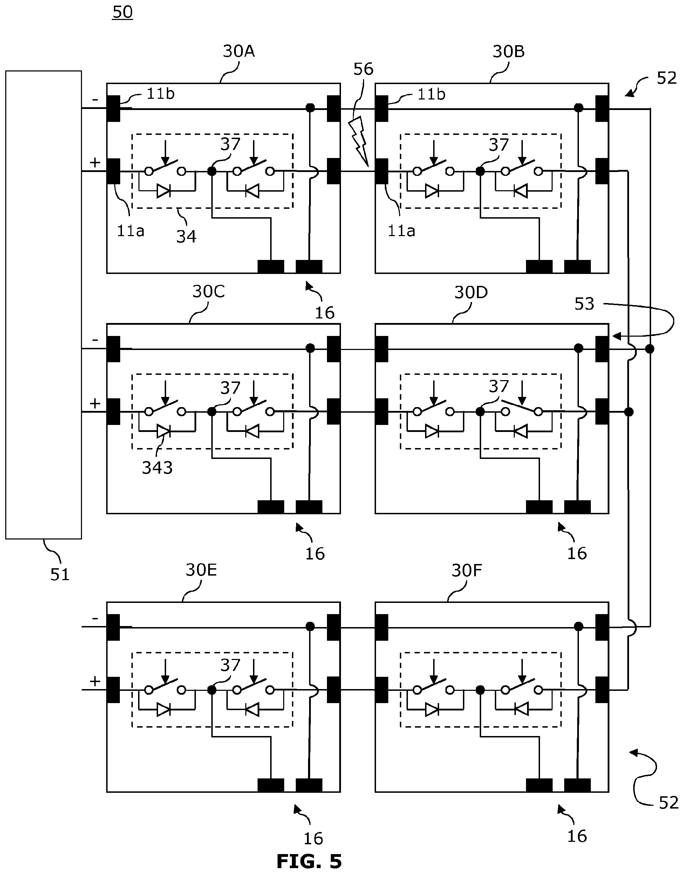

La figure 5 représente schématiquement un exemple de système de détection comprenant plusieurs circuits d'isolation électrique selon l'invention. Le système de détection 50 comprend une centrale de détection 51, six circuits d'isolation 30A, 30B, 30C, 30D, 30E et 30F, et six dispositifs de détection, non représentés. Les circuits d'isolation 30 correspondent chacun à l'exemple de réalisation de la figure 2 et sont représentés, par souci de facilité de lecture, sous forme simplifiée. On considère qu'un dispositif de détection est connecté à chaque circuit d'isolation 30 par l'intermédiaire de ses bornes d'alimentation 16. Chaque ensemble formé d'un dispositif de détection et d'un circuit d'isolation peut se présenter sous la forme d'un appareil électrique unique. Les circuits d'isolation 30A et 30C sont chacun connectés, par leurs bornes d'entrée 11, à la centrale de détection 51. Les circuits d'isolation 30B et 30D sont connectés, par leurs bornes d'entrée 11, aux bornes de sortie 12 des circuits d'isolation 30A et 30C, respectivement. Le circuit d'isolation 30E est connecté, par ses bornes de sortie 12, aux bornes d'entrée 11 du circuit d'isolation 30F. Ce dernier est connecté, par ses bornes de sortie 12, aux bornes de sortie 12 des circuits d'isolation 30B et 30D. Ainsi, les circuits d'isolation 30A et 30B forment une première branche 52, les circuits d'isolation 30C et 30D forment une deuxième branche 53, et les circuits d'isolation 30E et 30F forment une troisième branche 54. La centrale de détection 51 est agencée pour alimenter en énergie électrique les circuits d'isolation 30 et les dispositifs de détection, ainsi que pour communiquer avec eux. En particulier, elle peut commander l'activation et la désactivation des circuits d'isolation 30, notamment l'ouverture et la fermeture de leurs circuits interrupteurs 34, de même que l'activation et la désactivation des dispositifs de détection. Elle peut également échanger individuellement avec chaque circuit d'isolation 30 et/ou chaque dispositif de détection, des informations relatives à leur état de fonctionnement ou des données relatives à des mesures effectuées par les dispositifs de détection. Il est à noter que la centrale de détection peut dialoguer avec chaque circuit d'isolation directement ou via le dispositif de détection associé. De même, la centrale de détection peut dialoguer avec chaque dispositif de détection directement ou via le circuit d'isolation associé.

Le système de détection 50 peut être activé de la manière décrite ci-après. On considère qu'à l'instant initial, la centrale de détection ne fournit pas d'alimentation électrique, et que les circuits d'isolation 30 ont leur circuit interrupteur 34 ouvert. Lors d'une mise sous tension, la centrale de détection 51 fournit un signal d'alimentation reçu par les bornes d'entrée 11 des circuits d'isolation 30A et 30C. Le signal d'alimentation permet d'alimenter, via la diode 343 de ces circuits d'isolation, leur module 15 de détection de court-circuit et leur dispositif de détection associé. Le circuit de commande 153 des circuits d'isolation 30A et 30C peut alors commander la fermeture du circuit interrupteur 34. Les circuits d'isolation 30B et 30D sont alors alimentés par leurs bornes d'entrée, permettant également la fermeture de leur circuit interrupteur 34. À la suite de ces fermetures, le circuit d'isolation 30F est alimenté et peut fermer son circuit interrupteur 34. Enfin, le circuit d'isolation 30E est alimenté et ferme son circuit interrupteur 34.

Il est maintenant considéré, en référence à la figure 5, qu'un court-circuit 56 se produit entre les circuits d'isolation 30A et 30B. Plus précisément, un court-circuit se produit entre, d'une part, un tronçon de ligne électrique reliant la borne de sortie positive 12a du circuit d'isolation 30A à la borne d'entrée positive 11a du circuit d'isolation 30B et, d'autre part, un tronçon de ligne électrique reliant la borne de sortie négative 12b du circuit d'isolation 30A à la borne d'entrée négative 11 b du circuit d'isolation 30B. Lorsque tous les circuits interrupteurs 34 sont fermés, la chute de tension due au court-circuit est observée par tous les circuits d'isolation 30. Chaque circuit d'isolation 30 active alors, dans une étape 42, son circuit de commande 153. Une tension de contrôle $U_{tst}$ est déterminée sur chaque noeud central 37 dans une étape 43, et une durée d'attente $\Delta_{wt}$ est déterminée en conséquence pour chaque circuit d'isolation 30 dans une étape 44. La durée d'attente $\Delta_{wt}$ sera plus courte pour les circuits d'isolation 30A et 30B que pour les autres circuits d'isolation. Ainsi, l'étape 46 de vérification sera d'abord exécutée pour ces circuits d'isolation. Comme le court-circuit 56 n'a pas disparu, la tension $U_{chk}$ est inférieure à la tension seuil $U_{th}$, ce qui génère l'ouverture du circuit interrupteur 34 dans les deux circuits d'isolation 30A et 30B, et l'isolation du court-circuit 56. Malgré l'ouverture des circuits interrupteurs 34, tous les circuits d'isolations 30 restent alimentés. En particulier, les noeuds centraux 37 des circuits d'isolation 30A et 30B restent alimentés par la diode 343 ou 344, respectivement. Le module 15 de détection de court-circuit de ces circuits d'isolation, de même que leur dispositif de détection associé, peuvent donc continuer à fonctionner. À l'expiration de la durée d'attente $\Delta_{wt}$ déterminée pour chaque circuit d'isolation 30C-30F, la tension de vérification $U_{chk}$ sera déterminée pour ces circuits d'isolation. La tension sur les noeuds centraux 37 aura remonté, si bien que les circuits interrupteurs 34 des circuits d'isolation 30C-30F ne seront pas ouverts.

Bien sûr, l'invention n'est pas limitée aux exemples qui viennent d'être décrits et de nombreux aménagements peuvent être apportés à ces exemples sans sortir du cadre de l'invention. En particulier, il a été considéré des exemples de circuits d'isolation électrique comportant chacun deux bornes d'entrée et deux bornes de sortie. Le circuit d'isolation électrique pourrait néanmoins comporter un nombre différent de bornes d'entrée et de sortie, notamment une unique borne d'entrée et une unique borne de sortie, ou au moins trois bornes d'entrée et trois bornes de sortie. De même, il a été considéré qu'une seule des bornes d'entrée était connectée à une borne de sortie via un circuit interrupteur. Le circuit interrupteur pourrait néanmoins relier plusieurs couples de bornes d'entrée et de sortie, de manière à isoler des tronçons de plusieurs lignes électriques. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Circuit d'isolation électrique entre un premier tronçon (21a) de ligne électrique et un deuxième tronçon (22a) de ligne électrique, comprenant :

   ■ une borne d'entrée (11a) apte à être connectée au premier tronçon de ligne électrique,
   ■ une borne de sortie (12a) apte à être connectée au deuxième tronçon de ligne électrique,
   ■ un circuit interrupteur (14, 34) pouvant prendre une position fermée dans laquelle il relie électriquement la borne d'entrée à la borne de sortie, et une position ouverte, dans laquelle il isole électriquement la borne d'entrée de la borne de sortie, et
   ■ un module (15) de détection de court-circuit comportant :

      - un circuit de mesure (152) apte à déterminer une tension, dite de contrôle ($U_{tst}$), et une tension, dite de vérification ($U_{chk}$), la tension de contrôle et la tension de vérification étant représentative d'une tension sur un point (17, 37) du circuit interrupteur, et
      - un circuit de commande (153) agencé pour déterminer une durée d'attente ($\Delta_{wt}$) en fonction de la tension de contrôle, pour ordonner au circuit de mesure (152), à l'expiration de la durée d'attente, une détermination de la tension de vérification, et pour commander, en fonction de la tension de vérification, l'ouverture ou non du circuit interrupteur à l'expiration de la durée d'attente,

le circuit interrupteur (34) comportant deux interrupteurs commandés (341, 342) et deux diodes (343, 344), les interrupteurs commandés étant commandés par le circuit de commande (153) et étant connectés en série entre la borne d'entrée et la borne de sortie, un point de connexion commun entre les premier et deuxième interrupteurs étant appelé "noeud central" (37), chaque diode étant connectée en parallèle de l'un des interrupteurs commandés, les diodes étant connectées entre elles par leur cathode.

2. Circuit d'isolation électrique selon la revendication 1, dans lequel la durée d'attente comporte une première période sensiblement proportionnelle à la tension de contrôle.

3. Circuit d'isolation électrique selon la revendication 2, dans lequel la durée d'attente comporte en outre une deuxième période sensiblement constante.

4. Circuit d'isolation électrique selon l'une des revendications précédentes, dans lequel la tension de contrôle est représentative de la tension sur la borne d'entrée, sur la borne de sortie, ou sur le noeud central.

5. Circuit d'isolation électrique selon l'une des revendications précédentes comprenant, en outre, un module d'alimentation agencé pour alimenter en énergie électrique le module (15) de détection de court-circuit, le module d'alimentation étant connecté au noeud central (37), de manière à pouvoir recevoir un courant d'alimentation électrique circulant sur le premier tronçon (21a) de ligne électrique et/ou sur le deuxième tronçon (22a) de ligne électrique.

6. Circuit d'isolation électrique selon la revendication 5, dans lequel le module d'alimentation comporte un condensateur agencé pour stocker une quantité d'énergie électrique apte à alimenter en énergie électrique le module (15) de détection de court-circuit pendant une durée, dite durée d'autonomie, supérieure ou égale à la durée d'attente.

7. Circuit d'isolation électrique selon l'une des revendications précédentes comprenant, en outre, une borne d'alimentation (16a) connectée au noeud central (37), la borne d'alimentation étant apte à être connectée à un dispositif électrique.

8. Circuit d'isolation électrique selon l'une des revendications précédentes, dans lequel le module (15) de détection comporte, en outre :

- un comparateur (151) apte à comparer une tension, dite de surveillance ($U_{mon}$), à une tension de référence ($U_{ref}$), et à générer un signal de comparaison en fonction du résultat de la comparaison, la tension de surveillance étant représentative d'une tension sur un point (17, 37) du circuit interrupteur,

le circuit de commande (153) étant agencé, en outre, pour ordonner une détermination de la tension de contrôle, et pour passer, en fonction du signal de comparaison, d'un état de veille, dans lequel sa consommation électrique est limitée, à un état actif, dans lequel il est apte à ordonner une détermination de la tension de contrôle et de la tension de vérification, à déterminer la durée d'attente, et à commander l'ouverture du circuit interrupteur.

9. Circuit d'isolation électrique selon la revendication 8, dans lequel la tension de surveillance ($U_{mon}$) est représentative de la tension sur la borne d'entrée, sur la borne de sortie, ou sur le noeud central (37).

10. Procédé de commande d'un circuit d'isolation électrique selon l'une des revendications précédentes, le procédé comprenant successivement :

   ■ une étape (43) de détermination de la tension de contrôle ($U_{tst}$),
   ■ une étape (44) de détermination de la durée d'attente ($\Delta_{wt}$) en fonction de la tension de contrôle,
   ■ une étape (45) d'attente pendant la durée d'attente,
   ■ une étape (46) de vérification de la tension de contrôle comportant :

      - une sous-étape (461) de détermination de la tension de vérification ($U_{chk}$), et
      - une sous-étape (462) de comparaison de la tension de vérification à une tension seuil ($U_{th}$), et

   ■ si la tension de vérification est inférieure à la tension seuil, une étape (47) d'ouverture du circuit interrupteur.

11. Procédé de commande selon la revendication 10, dans lequel l'étape (43) de détermination de la tension de contrôle comprend une sous-étape de mesure dans laquelle une pluralité de mesures de la tension de contrôle sont effectuées, et une sous-étape de calcul d'une moyenne des mesures, appelée tension de contrôle moyenne, la durée d'attente étant déterminée en fonction de la tension de contrôle moyenne.

12. Procédé de commande selon l'une des revendications 10 et 11, pour un circuit d'isolation électrique (10, 30) selon l'une des revendications 8 et 9, comprenant, en outre, préalablement à l'étape (43) de détermination de la tension de contrôle :

   ■ une étape (41) de comparaison de la tension de surveillance ($U_{mon}$) à la tension de référence ($U_{ref}$), le comparateur (151) générant le signal de comparaison,

l'étape (43) de détermination de la tension de contrôle et les étapes suivantes (44-48) étant exécutées si la tension de surveillance est inférieure à la tension de référence, et n'étant pas exécutées sinon.

13. Procédé de commande selon la revendication 12 comprenant, en outre, lorsque la tension de surveillance est inférieure à la tension de référence, préalablement à l'étape (43) de détermination de la tension de contrôle :

   ■ une étape (42) d'activation du circuit de commande dans laquelle il passe de l'état de veille à l'état actif.

14. Ensemble de détection comprenant un circuit d'isolation (10, 30) selon l'une des revendications 1 à 9, et un capteur apte à détecter la présence d'un incendie.

**Patentansprüche**

1. Elektrische Isolierungsschaltung zwischen einem ersten Stromleitungsabschnitt (21a) und einem zweiten Stromleitungsabschnitt (22a), umfassend:

   ■ einen Eingangspol (11a), am ersten Stromleitungsabschnitt anschließbar,
   ■ einen Ausgangspol (12a), am zweiten Stromleitungsabschnitt anschließbar,
   ■ eine Schalterschaltung (14, 34), die eine geschlossene Position einnehmen kann, in welcher sie den Eingangs- mit dem Ausgangspol elektrisch verbindet, und eine offene Position, in welcher sie den Eingangs- von dem Ausgangspol elektrisch trennt, und
   ■ ein Modul (15) zur Erkennung von Kurzschlüssen, umfassend:

      - eine Messschaltung (152), dazu geeignet, eine sogenannte Kontrollspannung ($U_{tst}$) und eine sogenannte Prüfungsspannung ($U_{chk}$) zu bestimmen, wobei die Kontrollspannung und die Prüfungsspannung einer Spannung an einem Punkt (17, 37) der Schalterschaltung entsprechen, und
      - eine Steuerungsschaltung (153), dazu

ausgebildet, eine Wartezeit ($\Delta_{wt}$) entsprechend der Kontrollspannung zu bestimmen, bei Ablauf der Wartezeit einen Befehl an die Messschaltung (152) auszugeben, die Prüfungsspannung zu bestimmen, und die Öffnung oder die Nicht-Öffnung der Schalterschaltung bei Ablauf der Wartezeit entsprechend der Prüfungsspannung zu steuern,

wobei die Schalterschaltung (34) zwei gesteuerte Schalter (341, 342) und zwei Dioden (343, 344) umfasst, wobei die gesteuerten Schalter durch die Steuerungsschaltung (153) gesteuert werden und zwischen dem Eingangspol und dem Ausgangspol in Reihe geschaltet sind, wobei ein gemeinsamer Anschlusspunkt zwischen dem ersten und dem zweiten Schalter "zentraler Knoten" (37) genannt wird, wobei jede Diode parallel zu den gesteuerten Schaltern geschaltet wird und wobei die Dioden miteinander durch ihre jeweilige Kathode verbunden sind.

2. Elektrische Isolierungsschaltung nach Anspruch 1, wobei die Wartezeit eine erste Zeitspanne beinhaltet, welche im Wesentlichen proportional zur Prüfungsspannung ist.

3. Elektrische Isolierungsschaltung nach Anspruch 2, wobei die Wartezeit außerdem eine zweite, im Wesentlichen gleichbleibende Zeitspanne beinhaltet.

4. Elektrische Isolierungsschaltung nach einem der vorhergehenden Ansprüche, wobei die Prüfungsspannung der Spannung am Eingangspol, am Ausgangspol oder am zentralen Knoten entspricht.

5. Elektrische Isolierungsschaltung nach einem der vorhergehenden Ansprüche mit außerdem einem Versorgungsmodul, welches für die Stromversorgung des Moduls (15) zur Erkennung von Kurzschlüssen ausgebildet ist, wobei das Versorgungsmodul mit dem zentralen Knoten (37) geschaltet ist, sodass ein elektrischer Strom auf dem ersten Stromleitungsabschnitt (21a) und/oder auf dem zweiten Stromleitungsabschnitt (22a) auf genommen werden kann.

6. Elektrische Isolierungsschaltung nach Anspruch 5, wobei das Versorgungsmodul einen Kondensator umfasst, der zur Speicherung einer Menge elektrischer Energie ausgebildet ist, welche zur Versorgung des Moduls (15) zur Erkennung von Kurzschlüssen mit elektrischer Energie für eine sogenannte Autonomiezeit länger oder gleich der Wartezeit geeignet ist.

7. Elektrische Isolierungsschaltung nach einem der vorhergehenden Ansprüchen mit außerdem einem Zufuhrpol (16a), welcher mit dem zentralen Knoten (37) geschaltet ist, wobei der Zufuhrpol mit einer elektrischen Vorrichtung schaltbar ist.

8. Elektrische Isolierungsschaltung nach einem der vorhergehenden Ansprüche, wobei das Erkennungsmodul (15) außerdem umfasst:

- einen Komparator (151), der zum Vergleich einer sogenannten Überwachungsspannung ($U_{mon}$) mit einer Referenzspannung ($U_{ref}$) und zur Erzeugung eines Vergleichssignals entsprechend dem Vergleichsergebnis geeignet ist, wobei die Überwachungsspannung einer Spannung an einer Stelle (17, 37) der Schalterschaltung entspricht,

wobei die Steuerungsschaltung (153) außerdem derart ausgebildet ist, den Befehl zur Bestimmung der Kontrollspannung auszugeben und je nach Vergleichssignal von einem Ruhezustand, in welchem ihr Stromverbrauch eingeschränkt ist, in einen aktiven Zustand überzugehen, in welchem er dazu geeignet ist, den Befehl zu einer Bestimmung der Kontrollspannung und der Prüfungsspannung auszugeben, die Wartezeit zu bestimmen und die Öffnung der Schalterschaltung zu steuern.

9. Elektrische Isolierungsschaltung nach Anspruch 8, wobei die Überwachungsspannung ($U_{mon}$) der Spannung am Eingangspol, am Ausgangspol oder am zentralen Knoten (37) entspricht.

10. Steuerungsverfahren einer elektrischen Isolierungsschaltung nach einem der vorhergehenden Ansprüche, wobei das Verfahren nacheinander umfasst:

- einen Arbeitsschritt (43) der Bestimmung der Kontrollspannung ($U_{tst}$),
- einen Arbeitsschritt (44) der Bestimmung der Wartezeit ($\Delta_{wt}$) entsprechend der Kontrollspannung,
- einen Arbeitsschritt (45) des Wartens während der Wartezeit,
- einen Arbeitsschritt (46) der Prüfung der Kontrollspannung mit:

- einem Unter-Arbeitsschritt (461) der Bestimmung der Prüfungsspannung ($U_{chk}$) und
- einem Unter-Arbeitsschritt (462) des Vergleichs der Prüfungsspannung mit einer Schwellenspannung ($U_{th}$) und

- wenn die Prüfungsspannung kleiner als die Schwellenspannung ist, einem Arbeitsschritt (47) der Öffnung der Schalterschaltung.

11. Steuerungsverfahren nach Anspruch 10, wobei der Arbeitsschritt (43) der Bestimmung der Kontrollspannung einen Unter-Arbeitsschritt der Messung umfasst, bei welchem eine Vielzahl von Messungen der Kontrollspannung ausgeführt werden, und einen Unter-Arbeitsschritt der Berechnung eines Mittelwerts der Messungen, der sogenannten Durchschnittskontrollspannung, wobei die Wartezeit entsprechend der Durchschnittskontrollspannung bestimmt wird.

12. Steuerungsverfahren nach einem der Ansprüche 10 und 11 für eine elektrische Isolierungsschaltung (10, 30) nach einem der Ansprüche 8 und 9, außerdem vor dem Arbeitsschritt (43) der Bestimmung der Kontrollspannung umfassend:

■ einen Arbeitsschritt (41) des Vergleichs der Überwachungsspannung ($U_{mon}$) mit der Referenzspannung ($U_{ref}$), wobei der Komparator (151) das Vergleichssignal erzeugt, wobei der Arbeitsschritt (43) der Bestimmung der Kontrollspannung und die darauf folgenden Arbeitsschritte (44-48) ausgeführt werden, wenn die Überwachungsspannung unter der Referenzspannung liegt; andernfalls werden sie nicht ausgeführt.

13. Steuerungsverfahren nach Anspruch 12, außerdem vor dem Arbeitsschritt (43) der Bestimmung der Kontrollspannung umfassend, wenn die Überwachungsspannung kleiner als die Referenzspannung ist:

■ einen Arbeitsschritt (42) der Aktivierung der Steuerungsschaltung, bei welchem es von dem Ruhezustand in den aktiven Zustand übergeht.

14. Erkennungsanordnung mit einer Isolierungsschaltung (10, 30) nach einem der Ansprüche 1 bis 9 sowie einem zur Brandmeldung geeigneten Sensor.

**Claims**

1. Electrical isolation circuit between a first section (21 a) of electric line and a second section (22a) of electric line, comprising:

■ an input terminal (11 a) capable of being connected to the first section of electric line,
■ an output terminal (12a) capable of being connected to the second section of electric line,
■ a switch circuit (14, 34) able to adopt a closed position in which it electrically connects the input terminal to the output terminal, and an open position, in which it electrically isolates the input terminal from the output terminal, and
■ a short-circuit detection module (15) comprising:

- a measuring circuit (152) capable of determining a voltage called test voltage ($U_{tst}$), and a voltage called check voltage ($U_{chk}$), the test voltage and the check voltage being representative of a voltage at a point (17, 37) in the switch circuit, and
- a control circuit (153) arranged in order to determine a waiting time ($\Delta_{wt}$) as a function of the test voltage, in order to provide the measuring circuit (152), at the end of the waiting time, a determination of the check voltage, and to control, as a function of the check voltage, the opening or not of the switch circuit at the end of the waiting time,

the switch circuit (34) comprising two controlled switches (341, 342) and two diodes (343, 344), the controlled switches being controlled by the control circuit (153) and being connected in series between the input terminal and the output terminal, a shared connection point between the first and second switches being called "central node" (37), each diode being connected in parallel to one of the controlled switches, the diodes being connected to each other by their cathode.

2. Electrical isolation circuit according to claim 1, in which the waiting time includes a first period substantially proportional to the test voltage.

3. Electrical isolation circuit according to claim 2, in which the waiting time further includes a second, substantially constant period.

4. Electrical isolation circuit according to one of the preceding claims, in which the test voltage is representative of the voltage at the input terminal, at the output terminal, or at the central node.

5. Electrical isolation circuit according to one of the preceding claims, also comprising a supply module arranged in order to supply the short-circuit detection module (15) with electrical energy, the supply module being connected to the central node (37), so as to be able to receive an electrical supply current flowing through the first section (21 a) of electric line and/or through the second section (22a) of electric line.

6. Electrical isolation circuit according to claim 5, in which the supply module includes a capacitor arranged in order to store a quantity of electrical energy capable of supplying the short-circuit detection module (15) with electrical energy for a time, called autonomous time, greater than or equal to the waiting time.

7. Electrical isolation circuit according to one of the preceding claims, also comprising a supply terminal (16a) connected to the central node (37), the supply terminal capable of being connected to an electrical device.

8. Electrical isolation circuit according to one of the preceding claims, in which the detection module (15) also comprises:

   - a comparator (151) capable of comparing a voltage, called monitoring voltage ($U_{mon}$), to a reference voltage ($U_{ref}$), and of generating a comparison signal as a function of the result of the comparison, the monitoring voltage being representative of a voltage at a point (17, 37) in the switch circuit,

   the control circuit (153) being also arranged in order to provide a determination of the test voltage, and in order to pass, as a function of the comparison signal, from a stand-by state, in which its electical consumption is limited, to an active state, in which it is capable of providing a determination of the test voltage and the check voltage, determining the waiting time, and controlling the opening of the switch circuit.

9. Electrical isolation circuit according to claim 8, in which the monitoring voltage ($U_{mon}$) is representative of the voltage at the input terminal, at the output terminal, or at the central node (37).

10. Control method for an electrical isolation circuit according to one of the preceding claims, the method successively comprising:

   ▪ a step (43) of determining the test voltage ($U_{tst}$),
   ▪ a step (44) of determining the waiting time ($\Delta_{wt}$), as a function of the test voltage,
   ▪ a step (45) of waiting during the waiting time,
   ▪ a step (46) of checking the test voltage comprising:

      - a sub-step (461) of determining the check voltage ($U_{chk}$), and
      - a sub-step (462) of comparing the check voltage to a threshold voltage ($U_{th}$), and

   ▪ if the check voltage is less than the threshold voltage, a step (47) of opening the switch circuit.

11. Control method according to claim 10, in which the step (43) of determining the test voltage comprises a measuring sub-step in which a plurality of test voltage measurements are carried out, and a sub-step of calculating an average of the measurements, called average test voltage, the waiting time being determined as a function of the average test voltage.

12. Control method according to one of claims 10 and 11 for an electrical isolation circuit (10, 30) according to one of claims 8 and 9, also comprising, prior to the step (43) of determining the test voltage:

   ▪ a step (41) of comparing the monitoring voltage ($U_{mon}$) to the reference voltage ($U_{ref}$), the comparator (151) generating the comparison signal,

   the step (43) of determining the test voltage and the following steps (44-48) being executed if the monitoring voltage is less than the reference voltage, and otherwise not being executed.

13. Control method according to claim 12 also comprising, when the monitoring voltage is less than the reference voltage, prior to the step (43) of determining the test voltage:

   ▪ a step (42) of activating the control circuit in which it passes from the stand-by state to the active state.

14. Detection assembly comprising an isolation circuit (10, 30) according to one of claims 1 to 9, and a sensor capable of detecting the presence of a fire.

**FIG. 1**

**FIG. 2**

41 — $U_{mon} < U_{ref}$ ?

NON

OUI

42 — Activation du circuit de commande

43 — Détermination de la tension de contrôle $U_{tst}$

44 — Détermination de la durée d'attente $\Delta_{wt}$

45 — Attente pendant $\Delta_{wt}$

46 —
461 — Détermination de la tension de contrôle vérifiée $U_{chk}$

462 — $U_{chk} < U_{th}$ ?

OUI

NON

47 — Ouverture du circuit interrupteur

48 — Mise en veille du circuit de commande

**FIG. 3**

**FIG. 4**

**FIG. 5**

## RÉFÉRENCES CITÉES DANS LA DESCRIPTION

**Documents brevets cités dans la description**

- WO 2010015334 A